# EUROPEAN PATENT APPLICATION

(11) **EP 4 748 757 A1**
(43) Date of publication of application: **27.05.2026**
(21) Application number: 24856512.9
(22) Date of filing: 22.08.2024
(51) Int. Cl.: B65G 43/08, G06T 7/00

(54) **CONVEYANCE STATE DETECTION DEVICE AND CONVEYANCE STATE DETECTION METHOD**

(30) Priority: 23.08.2023 JP 2023135730
(71) Applicant: JFE Steel Corporation, Tokyo, 100-0011 (JP)
(72) Inventor: KAWANISHI Moe, Tokyo 100-0011 (JP); ISHIGAKI Yusuke, Tokyo 100-0011 (JP); NISHINA Yoshiaki, Tokyo 100-0011 (JP)
(74) Representative: Haseltine Lake Kempner LLP
(86) International application number: PCT/JP2024/029806
(87) International publication number: WO 2025/041824

(57) **Abstract**

A conveyance state of an article to be conveyed on a belt is automatically detectable. A conveyance state detection device (21) that detects a conveyance state of a raw material (2) on each belt (3) of a plurality of belt conveyors (1) that conveys the raw material (2), the device includes: an imaging device configured to image the belt (3) that conveys the article to be conveyed from above; and a conveyance state detection unit (10) that detects the conveyance state of the raw material (2) on the belt (3) by performing image processing on a captured image captured by the imaging device.

## Description

### Technical Field

The present invention relates to a technology for automatically detecting, by image processing, a conveyance state of an article to be conveyed on a belt of each belt conveyor, among a plurality of belt conveyors that convey the article to be conveyed.

### Background Art

Raw material (article to be conveyed) stored in a raw material yard is conveyed to each plant in the subsequent process, such as sintering, coke, and blast furnace, in accordance with the production of the steel works. Therefore, the conveying capacity of the raw materials in the raw material yard has a significant effect on the production of the steel works. In the raw material yard, a large number of belt conveyors are installed for conveying raw materials. Then, raw materials of different types and grades are conveyed. Therefore, the various raw materials are conveyed to a target place by being transferred through a plurality of belt conveyors at a transfer section using a drop-type chute or the like.

In this case, when the raw materials are loaded onto the belt at the transfer section of the belt conveyor, the raw materials may be loaded in a biased manner in the width direction of the belt. In this case, ore spillage may occur during the conveyance of the raw material. "Ore spillage" refers to the falling of raw material from the belt. In particular, as the conveyed quantity of the raw material increases, the risk of ore spillage increases. The conveyed quantity of the raw material refers to the loading amount on the belt. In addition, the mechanical trouble in the belt conveyor or the equipment around the belt conveyor and the cleaning cost increase due to the ore spillage.

In the related art, an operator observes an image captured by a camera on a screen and monitors a conveyance state of the raw material on the belt. However, it is difficult to constantly monitor the conveyance state by the belt conveyor through human visual observation. Therefore, in the related art, in order to avoid the risk of ore spillage, the loading amount of the raw material on the belt has been operated on the safe side. That is, the belt conveyor was operated while leaving a large margin for the conveyed quantity of the raw material with respect to the belt width. This is one of the factors that suppresses the conveying capacity of the raw materials in the raw material yard.

Therefore, in recent years, it has been desired to collectively monitor the conveyance states of a plurality of belt conveyors without relying on monitoring by human visual observation.

Here, as a technology for monitoring a belt abnormality of a belt conveyor, for example, a technology described in Patent Document 1 or Patent Document 2 is available.

In Patent Document 1, in order to manage a belt conveyor that conveys an article to be conveyed, an image of a belt is continuously acquired. Further, in Patent Document 1, the position of the belt is identified from the positional relationship of the image group continuously acquired. Patent Document 1 discloses that a risk of belt conveyor abnormality occurrence is identified from a positional relationship of the identified belt.

In Patent Document 2, image data of the end portion region of the belt in the width direction is input to a deterioration level determination model to determine a deterioration level of the end portion region of the belt in the width direction. In Patent Document 2, it is disclosed that information on the determined belt position and information on the deterioration level with respect to the belt position are output.

### Citation List

### Patent Literatures

Patent Document 1: JP 2019-18999 A
Patent Document 2: JP 2021-17296 A

### Summary of Invention

### Technical Problem

However, in the method of monitoring the belt abnormality described in Patent Document 1 and Patent Document 2, it is possible to monitor an abnormal state of the belt itself, such as the meandering of the running belt. However, in the methods described in Patent Document 1 and Patent Document 2, it is not possible to directly detect abnormalities of the article to be conveyed on the belt, such as the loading amount (conveyed quantity) of the article to be conveyed being too low.

The present invention has been made in view of the above-described points, and an object of the present invention is to enable automatic detection of a conveyance state of an article to be conveyed on a belt.

### Solution to Problem

In order to solve the problem, an aspect of the present invention is a conveyance state detection device that detects a conveyance state of an article to be conveyed on a belt of each belt conveyor among a plurality of belt conveyors that convey the article to be conveyed, the device including: an imaging device configured to image the belt of each of the belt conveyors from above; and a conveyance state detection unit configured to detect, for each belt, the conveyance state of the article to be conveyed on the belt by performing image processing on a captured image captured by the imaging device.

In addition, another aspect of the present invention is a conveyance state detection method of detecting a conveyance state of an article to be conveyed, which is conveyed by a belt of each belt conveyor, among a plurality of belt conveyors that convey the article to be conveyed, the method including: determining, for each belt, the conveyance state of the article to be conveyed on the belt by imaging the belt of each of the belt conveyors from above and performing image processing on a captured image.

### Advantageous Effects of Invention

According to the aspect of the present invention, for example, in the equipment in which the article to be conveyed is conveyed by the plurality of belt conveyors, the image processing is performed on the captured image obtained by imaging the belt of each belt conveyor. As a result, according to the aspect of the present invention, it is possible to individually automatically detect the conveyance state of the article to be conveyed on the belt of each belt conveyor.

### Brief Description of Drawings

FIG. 1 is a schematic view illustrating a configuration example of a belt conveyor and a conveyance state detection device according to a first embodiment of the present invention;
FIG. 2 is a view of an upper run belt as viewed in a belt running direction;
FIG. 3 is a diagram illustrating a configuration example of a conveyance state detection unit;
FIG. 4 is a view illustrating an example of a captured image according to a first embodiment based on the present invention; (a) illustrates a captured image captured by an imaging unit (camera); (b) illustrates a captured image obtained by cutting out a partial region from an image captured by the imaging unit (camera);
FIG. 5 is a view illustrating an image of an input ((a)) and an image of an output ((b)) in a trained individual model;
FIG. 6 is a flowchart illustrating a processing example of a conveyance state detection unit and a decision information output unit;
FIG. 7 is a schematic view illustrating a configuration example of a belt conveyor and a conveyance state detection device according to a second embodiment of the present invention;
FIG. 8 is a view illustrating an example of a captured image according to the second embodiment based on the present invention; (a) illustrates a captured image captured by an imaging unit (camera); and (b) illustrates a captured image obtained by cutting out a partial region from an image captured by the imaging unit (camera).

### Description of Embodiments

### "First Embodiment"

Next, a first embodiment of the present invention will be described with reference to the drawings.

Here, a plurality of belt conveyors are installed in a raw material yard. The raw materials are conveyed to a raw material yard by a plurality of belt conveyors and stored as a raw material pile. In addition, the raw materials are supplied to the subsequent step by a belt conveyor, as necessary. In the raw material yard, raw materials of different types and grades are conveyed by being transferred through a plurality of belt conveyors at a transfer section that uses a drop-type chute or the like.

In the present embodiment, the description will be made assuming the application to a plurality of belt conveyors used in a raw material yard. However, the present disclosure is also applicable to conveying equipment having a plurality of belt conveyors for conveying other articles to be conveyed.

In addition, in the present embodiment, as the article to be conveyed by the belt, a raw material made of bulk materials will be described as an example. The article to be conveyed is not limited to bulk materials.

In the following description, the article to be conveyed will also be referred to as a raw material.

Here, the present disclosure relates to a technology suitable for a plurality of belt conveyors that convey an article to be conveyed made of the same type of material. The convey destinations of the articles to be conveyed on the respective belt conveyors may be different from each other. However, the present disclosure is a technology suitable for detecting a conveyance state on a belt of the plurality of belt conveyors in conveying equipment in which the article to be conveyed is conveyed that is transferred through the plurality of belt conveyors.

### (Overall Configuration)

The present embodiment includes conveying equipment and a conveyance state detection device. The conveying equipment includes a plurality of belt conveyors that convey the article to be conveyed. The conveyance state detection device is a device that detects a conveyance state of an article to be conveyed on a belt of each of the belt conveyors.

In the present embodiment, a case where a plurality of belt conveyors used in the raw material yard described above are targeted will be described as an example. In addition, the present embodiment is a case of a configuration in which a conveyance state detection device 21 is provided for each belt conveyor.

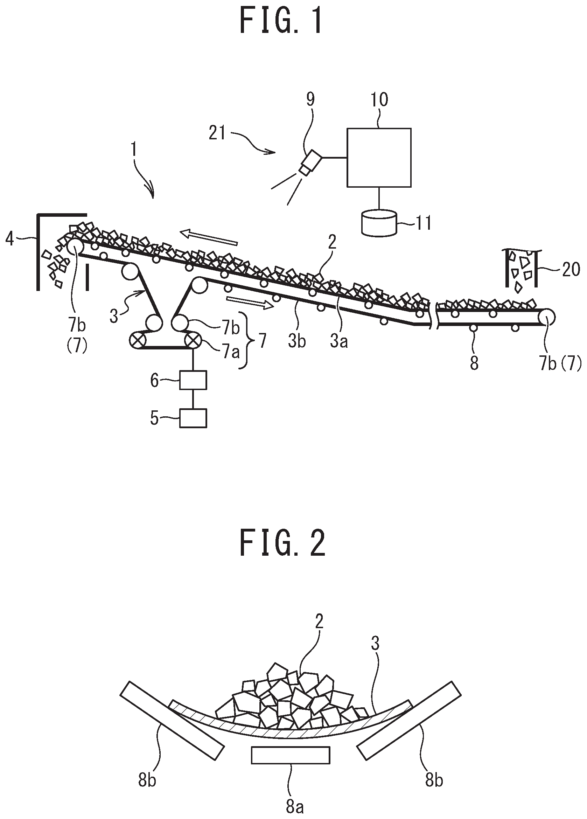

FIG. 1 is a schematic view illustrating one belt conveyor 1 of the present embodiment and the individual conveyance state detection device 21 corresponding to the one belt conveyor 1.

Here, a plurality of belt conveyors are installed in the raw material yard. However, in general, each belt conveyor that conveys the raw materials has the same configuration. However, in the present embodiment, each belt conveyor may have a different configuration. That is, the belt conveyor 1 described below is an example and may be a belt conveyor having another configuration.

Here, in the raw material yard, generally, a basic configuration of one belt conveyor and a conveyance state detection device corresponding to the belt conveyor is the same for each belt conveyor. Therefore, in the following, only one belt conveyor 1 and the corresponding conveyance state detection device 21 will be described.

### <Belt Conveyor 1>

The belt conveyor 1 includes an endless belt 3 and a pulley 7. The belt 3 runs on the plurality of rollers 8 with a predetermined tension by the rotation of the pulley 7 consisting of the drive pulley 7a and the plurality of driven pulleys 7b. The drive pulley 7a is rotationally driven by an electric motor 5 via a speed reducer 6.

In the present embodiment, as illustrated in FIG. 2, the roller that supports an upper run belt 3a among the rollers 8 includes a combination of a center roller 8a and right and left rollers 8b. The center roller 8a is disposed at the center in the width direction (the right-left direction in FIG. 2) in the belt width direction. The right and left rollers 8b are disposed on the right and left sides of the center roller 8a and are rollers having an inclined axis. Accordingly, the roller 8 is capable of supporting the upper run belt 3a in a trapezoidal state. The roller 8 that supports a lower run belt 3b side includes one roller. However, the configuration of supporting the belt 3 by the roller 8 is not limited thereto.

In addition, in the present embodiment, a raw material charging device 20 including a chute or the like is positioned upstream of the upper run belt 3a in the convey direction. The raw material 2 as an article to be conveyed is loaded on the belt 3 from the raw material charging device 20. Then, the raw material 2 is conveyed by the running belt 3. Then, the raw material 2 is conveyed to the downstream in the convey direction by the upper run belt 3a and is sequentially put into a chute 4.

### <Conveyance State Detection Device 21>

The conveyance state detection device 21 is a device that detects a conveyance state of the raw material 2 loaded on the belt 3 of the corresponding belt conveyor 1. The conveyance state of the raw material 2 is, for example, a placement state of the raw material 2 on the running belt 3.

As illustrated in FIG. 1, the conveyance state detection device 21 includes an imaging device 9 and a conveyance state detection unit 10. Reference numeral 11 is a database as an image storage device that stores the captured image.

### <Imaging Device 9>

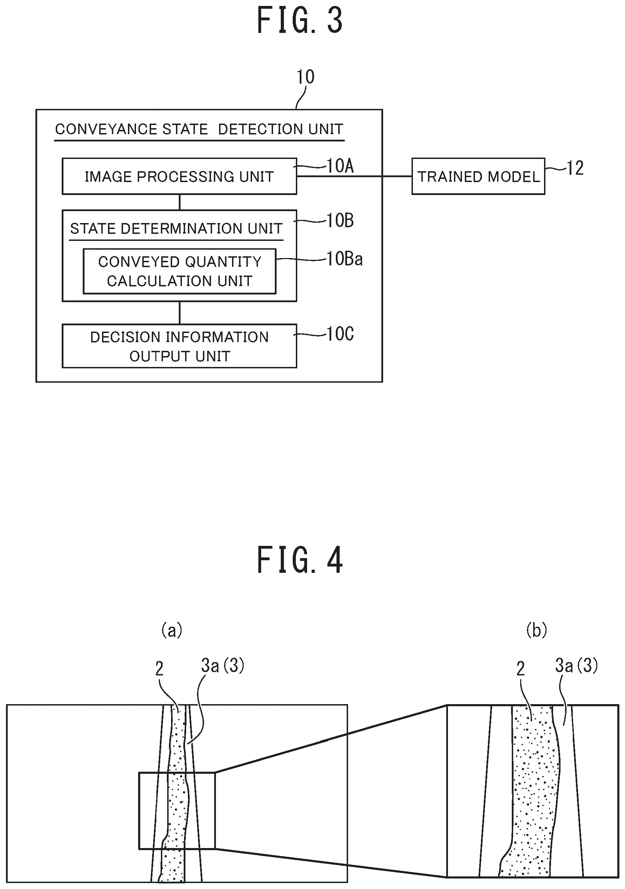

The imaging device 9 of the present embodiment includes a visible-light camera. The imaging device 9 images the upper run belt 3a of the belt 3 of the belt conveyor 1 from above to acquire a captured image. FIG. 4 is a schematic view illustrating an example of a captured image. The imaging device 9 is installed with adjustment to allow at least both end portions of the belt 3 in the width direction are imaged. In the example of FIG. 1, the imaging axis of the imaging device 9 is installed to be inclined in the running direction of the belt 3.

It is necessary to ensure a field of view that allows the belt 3 to be monitored sufficiently at the installation location of the imaging device 9. In addition, FIG. 1 illustrates a case where one imaging device 9 is provided in one belt conveyor 1. Two or more imaging devices 9 may be provided along the extension direction (running direction) of the upper run belt 3a. In this case, it is possible to detect ore spillage or the like in the middle due to a difference in the conveyance state at two positions along the convey direction.

### <Conveyance State Detection Unit 10>

As illustrated in FIG. 3, the conveyance state detection unit 10 includes an image processing unit 10A, a state determination unit 10B, and a decision information output unit 10C.

### <Image Processing Unit 10A>

The image processing unit 10A performs image processing on a captured image captured by the imaging device 9. Then, the image processing unit 10A acquires at least the conveyed-article region information among the conveyed-article region information and the belt region information. The conveyed-article region information is conveyed-article region information that is information on the region of the raw material 2 on the belt 3. The belt region information is information on a region of the belt 3 on which the raw material 2 is not placed. A part of the belt 3 on which the raw material 2 is not placed is a part in which the upper surface of the belt 3 is exposed.

Examples of the conveyed-article region information include position information of the placed raw material 2, and the like.

The image processing unit 10A may be configured to perform binarization and other enhancement processing on the acquired image as image processing. In this case, the widthwise edge position of the belt 3 in the image and the outer peripheral contour position of the raw material 2 placed on the belt 3 are detected. Then, the belt region information or the conveyed-article region information is acquired from the detected position.

The belt conveyor 1 in the raw material yard is often placed outdoors. In this case, due to the influence of the surrounding environment, the detection accuracy of the widthwise edge position of the belt 3 in the image detected from the captured image may deteriorate depending on the emphasis processing on the image. Here, the surrounding environment is a season, weather, and the like. In addition, in the emphasis processing, the detection accuracy of the outer peripheral contour position of the raw material 2 placed on the belt 3 may deteriorate.

Therefore, in the present embodiment, a trained model 12 is generated in advance by machine learning such as deep learning using the labeled training data in advance (refer to FIG. 3). The trained model 12 is a model that receives a captured image obtained by imaging the belt 3 of one target belt conveyor 1 as an input and outputs the conveyed-article region information of the region of the placement position of the raw material 2 placed on the belt 3.

Then, the image processing unit 10A of the present embodiment acquires the conveyed-article region information using the captured image as input data and the trained model 12.

A known learning method may be applied to the machine learning for obtaining the trained model 12. For example, semantic segmentation may be exemplified as machine learning for obtaining the trained model 12.

A case where semantic segmentation is adopted is considered. In this case, for each pixel constituting the captured image for learning captured in advance, labeled training image data is created in which each pixel is individually labeled as belonging to one of the classes of the three regions. The three regions are a region of the raw material 2 on the belt 3, a region of the belt 3 excluding the raw material position, and other regions. That is, the image is divided into a region of the raw material 2 on the belt 3, a region of the belt 3, and other regions. Then, the labeling is performed for each pixel in the image to create the labeled training image data to indicate which region (class) the pixel belongs to. Then, the trained model 12 is generated by training a large number of labeled training image data with the convolutional neural network. The trained model 12 receives the captured image (input data) as an input and outputs information relating to at least the region of the raw material 2 in the captured image.

Here, a plurality of pieces of labeled training image data in which the time period and the weather in which the imaging device 9 performs imaging are different may be prepared, and a model may be generated using the prepared plurality of pieces of labeled training image data. In this case, even in the captured image of the belt conveyor 1 outdoors, the region of the raw material 2 is detectable stably and with high accuracy. As a result, the automatic monitoring of the conveyance state of the raw material 2 becomes feasible with high accuracy.

The output information of the trained model 12 is, for example, data to which information indicating which region in the captured image is the region of the raw material 2 and which region is the region of the belt 3 is added. The region of the raw material 2 may be configured by one region or may be configured by a plurality of regions.

When the trained model 12 using the semantic segmentation is used, the following output is obtained. That is, image data in which identification information (conveyed-article region information) indicating that the pixel is the region of the raw material 2 is added to the pixel of the region of the raw material 2 in the output image is output for each pixel. That is, in the image data which is the output value of the trained model 12 using the semantic segmentation, the identification information is added to each pixel. The added identification information is information on the raw material 2, the belt 3, or the other. As a result, it is possible to identify which region is the raw material 2 and which region is the belt 3. For example, the trained model 12 outputs image data in which the color of the pixel is changed for each class and displayed.

Then, the image processing unit 10A uses the trained model 12, receives the captured image captured by the imaging device 9 as an input, and outputs the image data including the conveyed-article region information.

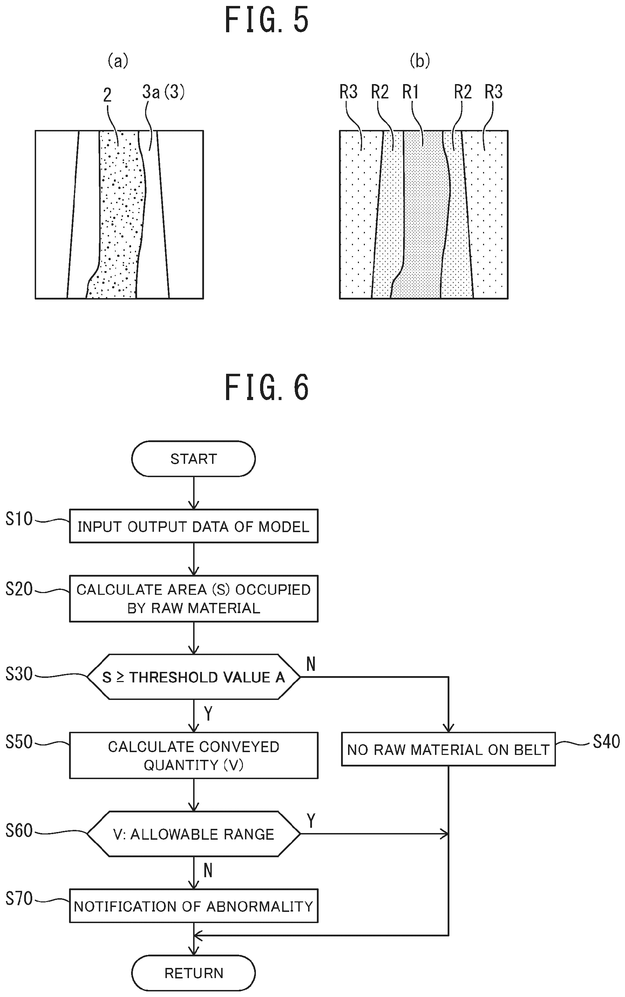

Here, the captured image input to the trained model 12 does not need to be the image captured by the imaging device 9. A case where the imaging device 9 is set to perform imaging of a predetermined length in the longitudinal direction (running direction) of the belt 3 as illustrated in FIG. 4(a) is considered. In this case, an image of a region as illustrated in FIG. 4(b), in which a part of the captured image in the longitudinal direction is cut out from the captured image, may be input to the trained model 12 as the captured image. The region to be cut out is only a specific region in which the conveyance state of the image data needs to be detected. The specific region is, for example, a region in which the state of the raw material 2 is stable, or conversely, a region in which the belt 3 is likely to meander in the width direction. In addition, two or more regions may be cut out. In this case, the image processing may be executed for each cut-out region. Here, reference numeral 3a refers to an exposed part of the belt 3 on which the raw material 2 is not placed. The same applies to FIG. 5(a).

The captured image, the cut-out image, and the like captured by the imaging device 9 are sequentially stored in the database 11. Then, the update processing of the trained model 12 may be appropriately executed on the stored images.

Here, in the present embodiment, the conveyance state detection device 21 is provided for each belt conveyor 1. Therefore, the trained model 12 is individually generated for each belt conveyor. Then, the conveyed-article region information is acquired by using the individual trained model 12 set for each belt conveyor.

### <State Determination Unit 10B>

The state determination unit 10B determines the conveyance state of the raw material 2 based on the information acquired by the image processing unit 10A.

Here, the conveyance state of the raw material 2 is, for example, information relating to a placement state of the raw material 2 placed on the belt 3. Further, the conveyance state of the raw material 2 is information relating to the presence or absence of the raw material 2 on the belt 3, information on the conveyed quantity of the raw material 2 by the belt 3, and the widthwise position of the raw material 2 present on the belt 3.

When the belt region information is also detected, the state of the relative position of the raw material 2 with respect to the belt 3 also becomes identifiable as the conveyance state. In addition, the conveyance state may be indirectly determined from the belt region information.

The state determination unit 10B of the present embodiment determines the conveyance state of the raw material 2 from the information obtained by the image processing unit 10A. The state determination unit 10B determines the conveyance state of the raw material 2 from, for example, the image to which the conveyed-article region information or the belt region information is added, which is output by the trained model 12.

### <Conveyed Quantity Calculation Unit 10Ba>

The state determination unit 10B of the present embodiment includes a conveyed quantity calculation unit 10Ba.

The conveyed quantity calculation unit 10Ba calculates the area of the raw material 2 present on the belt 3 in a top view. The conveyed quantity calculation unit 10Ba calculates the conveyed quantity of the raw material 2 by the belt 3 per unit length of the belt 3 from the calculated area of the raw material 2. The conveyed quantity constitutes an example of a conveyance state.

The conveyed quantity calculation unit 10Ba calculates the number of pixels of the raw material 2 in the image data output by the trained model 12, for example. The number of pixels of the raw material 2 corresponds to the area occupied by the raw material 2. Then, the conveyed quantity calculation unit 10Ba calculates the occupied area of the raw material 2 by multiplying the coefficient corresponding to the size of the pixel. Then, the conveyed quantity calculation unit 10Ba calculates the conveyed quantity per unit length of the raw material 2 loaded on the belt 3 from the calculated occupied area of the raw material 2. The conveyed quantity is calculable from the area of the raw material 2. For example, a formula for calculating a theoretical conveying capacity of a troughed belt conveyor is used. The formula for calculation is known, as described in, for example, "Majima Utaro: Conveyor Calculation Method, Kougakutosho Ltd., Tokyo, (1979), p.14". In this case, the volume of the raw material 2, that is, the conveyed quantity is calculable from the number of pixels (area) of the raw material 2 obtained from the specified pixel. In this case, the speed and density of the belt 3 are applied from the operating conditions.

### <Decision Information Output Unit 10C>

The decision information output unit 10C outputs information such as the decision information obtained by the state determination unit 10B, the conveyed quantity calculated by the conveyed quantity calculation unit 10Ba, and the conveyance state determined from such information. The decision information output unit 10C notifies the operator of the decision information or the like by outputting the information, for example.

An example of a processing flow of the state determination unit 10B and the decision information output unit 10C will be described with reference to FIG. 6. This processing is repeatedly executed, for example, each time an output from the image processing unit 10A is input.

The state determination unit 10B first inputs the output data (image data) of the trained model 12 in step S10.

Here, in the present embodiment, for example, the captured image as illustrated in FIG. 5(a) is input to the trained model 12, and the image data as illustrated in FIG. 5(b) is output. The image of the image data illustrated in FIG. 5(b) illustrates a region R1 of the raw material 2, a region R2 of the belt 3, and the other regions R3 in different displays. As described above, the identification information is added in units of pixels. Here, the identification information of the pixel may be changed for each type of the raw material 2. In FIG. 5(b), R1 refers to a region of the raw material 2, R2 refers to a region of the belt 3 in which the raw material 2 is not present, and R3 refers to the other regions. The same identification information is added to the pixels in the same region.

Next, in step S20, the pixel of the raw material 2 (article to be conveyed) in the image data acquired in step S10 is specified, and the number of pixels of the raw material 2 is calculated. The number of pixels is proportional to an area S occupied by the raw material 2. A coefficient for converting the size of one pixel into the size on the actual belt 3 is multiplied by the calculated number of pixels. As a result, the area S occupied by the raw material 2 is calculated.

Next, in step S30, it is determined whether or not the number of pixels of the raw material 2 calculated in step S20 is equal to or greater than a threshold value A set in advance. Instead of the number of pixels of the raw material 2, it may be determined whether or not the area S occupied by the raw material 2 is equal to or greater than a threshold value set in advance. Then, when the value is equal to or greater than the threshold value A, the process proceeds to step S50, and when the value is less than the threshold value A, the process proceeds to step S40. The threshold value A may be set based on the operating conditions.

In step S40, it is determined that "the raw material 2 is not present on the belt 3", the determination result is output, and the processing is ended. The notification of the determination result is executed by, for example, generation of an alarm sound, transmission to an e-mail, display on a screen, or the like. Accordingly, the operator becomes able to know that the raw material 2 is not present on the belt 3.

When the raw material 2 is present on the belt 3, the process proceeds to step S50. Then, a conveyed quantity V of the raw material 2 in the cut-out image region is calculated. The conveyed quantity V is calculable from the area S of the raw material 2 by a known unit.

Then, the calculated conveyed quantity V is output to a display unit.

Next, in step S60, it is determined whether or not the conveyed quantity V calculated in step S50 is within an allowable range (V1 or more and V2 or less) set in advance. Then, when the value is within the allowable range, the processing is ended. When the value is outside the allowable range, the process proceeds to step S70.

It may be determined whether or not the value is within the allowable range, from the size of the exposed part of the belt in the belt width direction from the belt region information.

A case where the value is outside the allowable range includes a case where the conveyed quantity is too large and a case where the conveyed quantity is too small. When the conveyed quantity is too large, (V > V2) is satisfied. When the value is too small, (V < V1) is satisfied.

That is, the range (the lower limit value V1 and the upper limit value V2) of the appropriate conveyed quantity may be calculated according to the convey condition, and the range may be set as the allowable range.

In step S70, the result of the abnormality determination is output. The notification of the abnormality determination is executed by, for example, generation of an alarm sound, transmission to an e-mail, display on a screen, or the like. The operator is capable of adjusting the increase or decrease in the conveyed quantity of the raw material 2 conveyed by the belt 3 based on the output determination result and the conveyed quantity.

In addition, the presence or absence of the ore spillage from the belt 3 is estimated.

In addition, the operator may adjust the loading amount of the raw material 2 on the belt 3 based on the history of the continuously acquired conveyed quantity.

Here, when it is determined that the raw material 2 is loaded on the belt 3, the state determination unit 10B may execute processing of detecting the position of the raw material 2 on the belt 3 as the conveyance state.

For example, the positions of both end portions of the belt 3 in the width direction or the widthwise center position of the belt 3 is obtained from the pixels representing the region of the belt 3. Further, the centroid of the region of the raw material 2 is obtained from the positions of the pixels of the raw material 2. Then, the deviation in the belt width direction of the centroid point of the region of the raw material 2 with respect to the widthwise center of the belt 3 is used to detect the lateral offset in the belt width direction of the raw material 2 loaded on the belt 3. In addition, for example, a distance in the belt width direction between the end portion of the belt 3 in the width direction and the contour of the region of the raw material 2 may be calculated as the conveyance state of the raw material 2.

The distance in the belt width direction between the end portion of the belt 3 in the width direction and the contour of the region of the raw material 2 is a determination material for the limit of the conveyed quantity of the raw material 2 loaded on the belt 3.

Here, the present embodiment is an example in which the conveyance state detection device 21 is individually provided for each belt conveyor 1. In this case, a plurality of places in the longitudinal direction on the belt 3 of one belt conveyor 1 may be places where the conveyance state is individually detected. In this case, the trained model 12 may be provided for each place, or the trained model 12 common to the plurality of places may be provided for each belt conveyor 1.

### (Operation and Others)

In the present embodiment, a visible-light camera (imaging device 9) is respectively installed for each belt conveyor at a position where the belt 3 of the belt conveyor 1 can be monitored. The camera constantly monitors the belt 3 that conveys the raw material 2 (article to be conveyed). In the present embodiment, the image processing is performed on the captured image captured by the camera, and accordingly, the conveyance state of the raw material 2 on the belt 3 is automatically detectable for each belt conveyor. In the present embodiment, since the automatic detection is performed, it is possible to efficiently monitor the conveyance states of the plurality of belt conveyors 1 collectively without relying on the human visual observation.

This allows the operator to grasp the presence or absence of the raw material 2 on the belt 3, the width or the conveyed quantity of the raw material 2 on the belt 3. Then, by appropriately adjusting the conveyed quantity of the raw material 2 conveyed by each of the belt conveyors 1 to an appropriate value, it is possible to prevent the ore spillage from the belt 3 in advance. In addition, it is possible to take an efficient measure before the occurrence of the equipment trouble. Therefore, in the present embodiment, it is possible to reduce equipment trouble caused by ore spillage, cleaning time, and cleaning cost.

In addition, it is possible to efficiently detect whether or not the appropriate maximum amount of the raw material is being conveyed without ore spillage. Therefore, by maximizing the conveyed quantity with respect to the equipment specification of the belt conveyor 1, it is possible to reduce demurrage that would otherwise be incurred due to suppression of the conveyed quantity.

Further, in the present embodiment, the conveyance state is detected using an individual trained model 12 for each belt conveyor. Therefore, even when the present disclosure is applied to the outdoor belt conveyor 1, it is possible to detect the conveyance state with high accuracy.

As described above, the present disclosure is useful for monitoring the raw material yard for conveying and storing the raw materials 2 such as iron ore and coal. The present disclosure is a technology particularly suitable for detecting the lateral offset of the raw material 2.

In the present disclosure, the conveyance state of the raw material 2 conveyed by the belt 3 is not indirectly detected from the state of the belt 3 itself as in the related art. The present disclosure detects a conveyance state where the raw material 2 is in a state on the belt 3. Then, the belt 3 is determinable to be abnormal in convey in some cases from the detection of the conveyance state.

### "Second Embodiment"

Next, a second embodiment of the present invention will be described. The same reference numerals will be given to the same configurations as the reference numerals in the first embodiment, and the detailed description of the configurations will be omitted.

In the first embodiment, a case where the conveyance state detection device 21 is individually provided for each belt conveyor 1 is exemplified. In the first embodiment, the trained model 12 is individually generated for each belt conveyor. In the first embodiment, the trained model 12 generated for each belt conveyor is used to acquire the conveyed-article region information on the belt of each belt conveyor.

On the other hand, in the present embodiment, a trained model common to a plurality of belt conveyors is generated. Then, in the present embodiment, the conveyed-article region information is acquired by using the common trained model. This point is different from the first embodiment. Other configurations may be configured in the same manner as in the first embodiment.

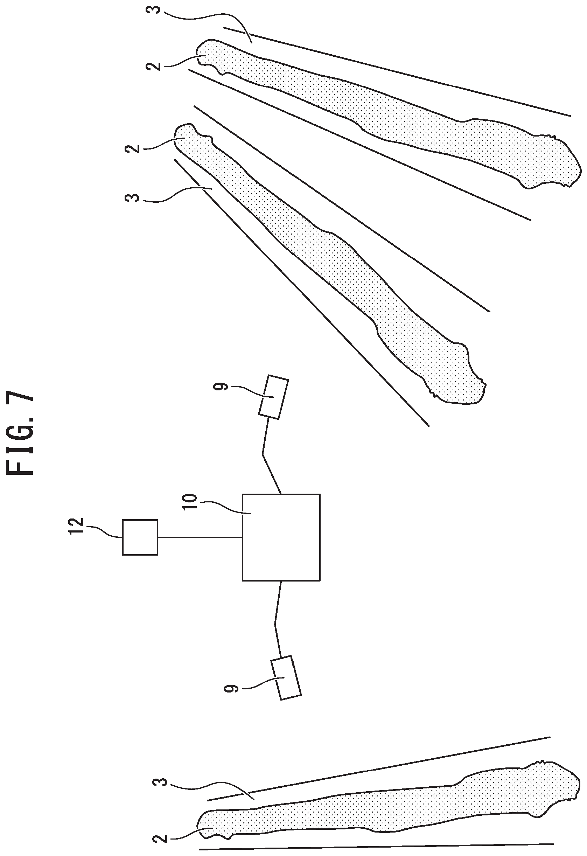

In the present embodiment, for example, as illustrated in FIG. 7, the captured image of each belt 3 of the plurality of belt conveyors 1 is acquired by each imaging device 9. As illustrated in FIG. 7, the imaging device 9 may be installed for each belt 3, or one imaging device 9 may be installed for a plurality of belts 3. The imaging device 9 images each of the corresponding belts 3 (upper run belts 3a) of the belt conveyor from above and acquires the captured images. The imaging device 9 supplies the acquired captured image to the conveyance state detection unit 10.

Then, as in the first embodiment, the conveyance state detection unit 10 performs processing in which the image processing unit 10A uses the common trained model 12, receives the captured images captured by each of the imaging devices 9 as an input, and outputs image data including conveyed-article region information. The common trained model 12 may be generated by using semantic segmentation or the like.

### <About Trained Model>

Here, in the first embodiment, the trained model 12 is individually generated for each belt conveyor by using the labeled training image data of the belt 3 of each belt conveyor 1.

On the other hand, in the present embodiment, the trained model 12 common to the plurality of belt conveyors is generated by combining a plurality of pieces of labeled training image data for each of the plurality of belts 3 respectively captured by the plurality of belt conveyors and performing training with the convolutional neural network.

Here, the captured images of the belt 3 respectively captured by the plurality of imaging devices 9 often have different fields of view. Therefore, when the captured image is trained as the labeled training image data as it is to generate the trained model 12, the detection accuracy of the conveyance state may be lowered. In addition, when the captured image is input to the trained model 12 as it is, the detection accuracy of the conveyance state may be lowered.

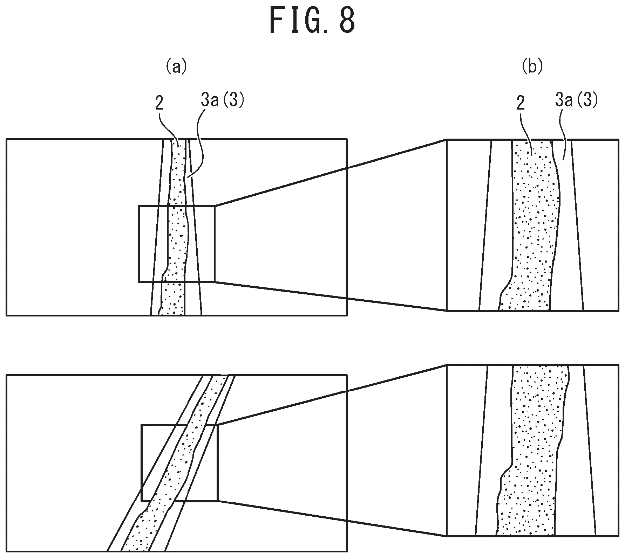

Therefore, as illustrated in FIG. 8, it is preferable to perform viewpoint alignment processing (normalization processing) for each of the captured images of the plurality of belts 3 captured by the plurality of imaging devices 9. As an example of the viewpoint alignment processing, projective transformation processing may be exemplified. By performing the projective transformation processing on each captured image, captured images having different fields of view (imaging angles) are alignable to the same angle of view (imaging angle). When one imaging device 9 is installed for the plurality of belts 3, that is, when a plurality of belts 3 are present in one captured image, normalization processing (projective transformation processing) is individually performed for each belt 3 in the captured image.

As described above, in the present embodiment, one common trained model 12 is generated using the captured images of the plurality of belts 3 in which the angles of view are aligned. Then, the captured image after normalization is input to the common trained model 12. Accordingly, it is possible to accurately detect the conveyance state of each belt 3 of the plurality of belt conveyors of the plurality of belt conveyors 1 by one common trained model 12. That is, the conveyance state of the plurality of belt conveyors 1 can be monitored by one conveyance state detection unit 10. Therefore, the monitoring efficiency is improvable as compared with a configuration in which the conveyance state detection unit 10 is provided for each belt conveyor.

The plurality of belt conveyors may be divided into a plurality of groups, and one common trained model 12 and one conveyance state detection unit 10 may be provided for each group. In addition, in this case, a configuration may be adopted in which one common trained model 12 is used for all the plurality of groups instead of providing the common trained model 12 for each group.

In addition, the common trained model 12 may be generated for each of two or more belt conveyors selected from the plurality of target belt conveyors.

Other configurations, operations, and the like are the same as the configurations, operations, and the like in the first embodiment.

### (Others)

The present disclosure may also have the following configurations.
(1) A conveyance state detection device that detects a conveyance state of an article to be conveyed on a belt of each belt conveyor among a plurality of belt conveyors that convey the article to be conveyed, the device including:
   an imaging device configured to image the belt of each of the belt conveyors from above; and
   a conveyance state detection unit configured to detect, for each belt, the conveyance state of the article to be conveyed on the belt by performing image processing on a captured image captured by the imaging device.
(2) The conveyance state detection unit may detect, for each belt, at least one of information on presence or absence of the article to be conveyed on the belt and information on a conveyed quantity of the article to be conveyed by the belt, as the conveyance state of the article to be conveyed.
(3) The conveyance state detection unit may include an image processing unit that acquires, for each belt, conveyed-article region information which is information relating to a region of the article to be conveyed that is present on each belt, through image processing, and a state determination unit that determines the conveyance state, which is a state of the article to be conveyed loaded on the belt, based on the acquired conveyed-article region information.
(4) The image processing unit may acquire the conveyed-article region information from the captured image captured by the imaging device by using a trained model generated by training, with a convolutional neural network, labeled training image data in which each pixel of a captured image captured in advance is classified as to which region class the pixel belongs to among the region of the article to be conveyed on the belt, a region of the belt, and other regions.
(5) The trained model may be individually provided for each of the belt conveyors.
(6) The trained model may be a trained model generated by performing training by using the labeled training image data of the plurality of belt conveyors, and the trained model may be a trained model common to the plurality of belt conveyors.
(7) The image processing unit may perform projective transformation processing on the captured image captured by the imaging device, and acquire the conveyed-article region information from the captured image after the projective transformation.
(8) The conveyance state detection unit may include a conveyed quantity calculation unit that, for each belt, calculates an area of an article to be conveyed present on the belt, and obtains a conveyed quantity of the article to be conveyed from the calculated area of the article to be conveyed as information on the conveyance state.
(9) The conveyance state detection unit may include a decision information output unit that determines whether or not the conveyed quantity calculated by the conveyed quantity calculation unit is within an allowable range set in advance, and outputs a determination result when the conveyed quantity is determined to be outside the allowable range.
(10) A conveyance state detection method of detecting a conveyance state of an article to be conveyed, which is conveyed by a belt of each belt conveyor, among a plurality of belt conveyors that convey the article to be conveyed, the method including: determining, for each belt, the conveyance state of the article to be conveyed on the belt by imaging of the belt of each of the belt conveyors from above and performing image processing on a captured image.
(11) By the image processing, conveyed-article region information that is information relating to a region of the article to be conveyed present on the belt may be acquired, and
based on the acquired conveyed-article region information, the conveyance state which is a state of the article to be conveyed loaded on the belt may be determined for each belt.

Here, the entire contents of JP 2023-135730 A (filed on August 23, 2023), for which the present application claims priority, form a portion of the present disclosure by reference. Although the present invention has been described with reference to the definite number of embodiments, the scope of the present invention is not limited thereto and modifications of the embodiments based on the above disclosure are obvious to those skilled in the art.

### Reference Signs List

1: belt conveyor
2: raw material (example of article to be conveyed)
3: belt
9: imaging device
10: conveyance state detection unit
10A: image processing unit
10B: state determination unit
10Ba: conveyed quantity calculation unit
10C: decision information output unit
12: trained model
21: conveyance state detection device

## Claims

1. A conveyance state detection device that detects a conveyance state of an article to be conveyed on a belt of each belt conveyor among a plurality of belt conveyors that convey the article to be conveyed, the device comprising:
an imaging device configured to image the belt of each of the belt conveyors from above; and
a conveyance state detection unit configured to detect, for each belt, the conveyance state of the article to be conveyed on the belt by performing image processing on a captured image captured by the imaging device.

2. The conveyance state detection device according to claim 1, wherein the conveyance state detection unit detects, for each belt, at least one of information on presence or absence of the article to be conveyed on the belt and information on a conveyed quantity of the article to be conveyed by the belt, as the conveyance state of the article to be conveyed.

3. The conveyance state detection device according to claim 1 or 2,
wherein the conveyance state detection unit includes
an image processing unit that acquires, for each belt, conveyed-article region information which is information relating to a region of the article to be conveyed that is present on each belt, through image processing, and
a state determination unit that determines the conveyance state, which is a state of the article to be conveyed loaded on the belt, based on the acquired conveyed-article region information.

4. The conveyance state detection device according to claim 3, wherein the image processing unit acquires the conveyed-article region information from the captured image captured by the imaging device by using a trained model generated by training, with a convolutional neural network, labeled training image data in which each pixel of a captured image captured in advance is classified as to which region class the pixel belongs to among the region of the article to be conveyed on the belt, a region of the belt, and other regions.

5. The conveyance state detection device according to claim 4, wherein the trained model is individually provided for each of the belt conveyors.

6. The conveyance state detection device according to claim 4, wherein the trained model is a trained model generated by performing training by using the labeled training image data of the plurality of belt conveyors, and the trained model is a trained model common to the plurality of belt conveyors.

7. The conveyance state detection device according to any one of claims 3 to 6, wherein the image processing unit performs projective transformation processing on the captured image captured by the imaging device, and acquires the conveyed-article region information from the captured image after the projective transformation.

8. The conveyance state detection device according to any one of claims 1 to 7, wherein the conveyance state detection unit includes a conveyed quantity calculation unit that, for each belt, calculates an area of an article to be conveyed present on the belt, and obtains a conveyed quantity of the article to be conveyed from the calculated area of the article to be conveyed as information on the conveyance state.

9. The conveyance state detection device according to claim 8, wherein the conveyance state detection unit includes a decision information output unit that determines whether or not the conveyed quantity calculated by the conveyed quantity calculation unit is within an allowable range set in advance, and outputs a determination result when the conveyed quantity is determined to be outside the allowable range.

10. A conveyance state detection method of detecting a conveyance state of an article to be conveyed, which is conveyed by a belt of each belt conveyor, among a plurality of belt conveyors that convey the article to be conveyed, the method comprising:
determining, for each belt, the conveyance state of the article to be conveyed on the belt by imaging the belt of each of the belt conveyors from above and performing image processing on a captured image.

11. The conveyance state detection method according to claim 10, further comprising:
acquiring, by the image processing, conveyed-article region information that is information relating to a region of the article to be conveyed present on the belt; and
determining, based on the acquired conveyed-article region information, the conveyance state which is a state of the article to be conveyed loaded on the belt for each belt.
